# EUROPÄISCHE PATENTSCHRIFT

(11) **EP 1 151 659 B1**
(45) Veröffentlichungstag und Bekanntmachung des Hinweises auf die Patenterteilung: **24.11.2004**
(21) Anmeldenummer: 01108271.6
(22) Anmeldetag: 02.04.2001
(51) Int. Cl.: A01F 29/10

(54) **Erntemaschine, insbesondere selbstfahrender Feldhäcksler**
Harvesting machine especially self-propelled forage harvester
Machine de récolte en particulier faucheuse-hacheuse

(30) Priorität: 04.05.2000 DE 10021661
(43) Veröffentlichungstag der Anmeldung: 07.11.2001
(73) Patentinhaber: Maschinenfabrik Bernard Krone GmbH, 48480 Spelle (DE)
(72) Erfinder: Krone, Bernard, Dr.-Ing. E.H., 48480 Spelle (DE); Berth, Dieter, 01844 Neustadt (DE); Strobel, Thomas, 01833 Stolpen OT Langenwolmsdorf (DE); Radke, Karl-Heinz, 02681 Wilthen (DE)
(74) Vertreter: Busse & Busse Patentanwälte

(56) Entgegenhaltungen:
- EP-A- 0 300 299
- EP-A- 0 656 172
- DE-A- 3 330 195
- FR-A- 2 286 599
- US-A- 4 127 981

## Beschreibung

Die Erfindung bezieht sich auf eine Erntemaschine, insbesondere einen selbstfahrenden Feldhäcksler zum Aufnehmen und Häckseln von Mais, Anwelkgras, Grünfutter und dergleichen Erntegut mit einem einer Häckseleinrichtung vorgeordneten, antreibbare Zuführelemente aufweisenden Einzugsgehäuse, das aus einer eingeschwenkten Betriebsstellung um eine Achse in eine aufgeschwenkte Wartungsstellung überführbar ist wobei das Einzugsgehünse um eine quer zur Fahrtrichtung der Erntemaschine ausgerichtete, im wesentlichen horizontale Achse in Fuhrtrichtung nach vorne zum Borden hin abklappbar ist. Erntemaschinen der vorgenannten Art sind in vielfältiger Ausgestaltung bekannt. Solche Maschinen, insbesondere auch selbstfahrende Feldhäcksler haben sich in den letzten Jahren zu sehr leistungsstarken Maschinen entwickelt, die neben dem Mähen und Ernten von Mais auch zunehmend zum Häckseln von Welkgut, Heu, Stroh und sonstigem Erntegut Einsatz finden. Dazu sind dem Einzugsgehäuse, zum Beispiel eine Pickup, ein Maisgebiß oder ein sonstiger Vorsatz vorgeordnet. Eine solche Maschine ist aus DE-A-3330195 bekannt.

Um insbesondere bei abgebauten Vorbauten das dem Einzugsgehäuse nachgeordnete Häckselaggregat warten zu können, ist es bekannt, das Einzugsgehäuse über zum Beispiel Schnellverschlüsse aufklappbar auszugestalten, um eine Messertrommel und Gegenschneiden für Wartungszwecke schnell zugänglich zu haben..

Es ist Aufgabe der vorliegenden Erfindung, eine Erntemaschine der eingangs genannten Art derart weiterzubilden, daß ein dem Einzugsgehäuse nachgeordnetes Häckselaggregat sehr schnell und sehr einfach zugänglich ist.

Zur Lösung dieser Aufgabe zeichnet sich die Erntemaschine der eingangs genannten Art dadurch aus, daß die Zuführelemente des Einzugsgehäuses über eine bereichsweise gleichsinnig mit dem Einzugsgehäuse verschwenkbare und bereichsweise teleskopartig ausgebildete Gelenkwelle antreibbar sind.

Damit ist eine Erntemaschine zur Verfügung gestellt, bei der das Einzugsgehäuse für Wartungsarbeiten an dem Häckselaggregat ohne das Erfordernis der Demontage der Gelenkwelle bzw. der Gelenkwellen von Zuführelementen des Einzugsgehäuses aufgeklappt werden kann, da durch die besondere Gestaltung und Anordnung der Gelenkwelle diese der Abklappbewegung des Einzugsgehäuses folgen kann. Dazu wird ein Bereich der Gelenkwelle gleichsinnig abgeklappt unter bereichsweiser Längenveränderung des teleskopartig ausgebildeten Gelenkwellenbereiches. Das Aufklappen des Einzugsgehäuses ist daher mit nur wenigen Handgriffen und damit außerordentlich schnell zu vollziehen, so daß Stillstandzeiten der Erntemaschine um ein wesentliches Maß verringert sind.

Bevorzugtermaßen ist der teleskopartig ausgebildete Bereich der Gelenkwelle zwischen dem gleichsinnig mit dem Einzugsgehäuse verschwenkbaren Bereich der Gelenkwelle und der gelenkigen erntemaschinenseitigen Anbindung der Gelenkwelle vorgesehen, so daß der verschwenkbare Bereich der Gelenkwelle an dem Einzugsgehäuse angreift und längenunveränderlich bis zur Schwenkachse des verschwenkbaren Bereiches der Gelenkwelle ausgebildet ist. Diese Schwenkachse ist so vorgesehen, daß diese möglichst nahe an der Klappachse des Einzugsgehäuses gelegen ist. Je nach Lage der Gelenkwelle muß dazu diese Schwenkachse nicht koaxial zu der Klappachse des Einzugsgehäuses ausgerichtet sein. Eine gleichsinnige Verschwenkung mit dem Einzugsgehäuse bzw. die entsprechende gleichsinnige Abklappbarkeit ist auch dann zu vollziehen, wenn diese Schwenkachse des gleichsinnig verschwenkbaren Bereiches der Gelenkwelle in einen Bereich hineingelegt ist, der derart nah an der Klappachse des Einzugsgehäuses gelegen ist, daß die Schwenkachse nahe parallel zu dieser verläuft oder zu dieser unter einem spitzen Winkel ausgerichtet ist, sei es in Fahrtrichtung vor oder hinter der Klappachse oder oberhalb bzw. leicht unterhalb von dieser. Wesentlich hierbei ist, daß diese so nahe an der Klappachse des Einzugsgehäuses gelegen ist, daß die gleichsinnige Verschwenkung des verschwenkbaren Bereiches der Gelenkwelle ohne das Erfordernis der Demontage der Gelenkwelle durchgeführt werden kann. Dabei bleibt die Antriebverbindung bei abgeschaltetem Antrieb erhalten.

Der teleskopartige Bereich der Gelenkwelle kann durch frei ineinandergreifende Gelenkwellenelemente, zum Beispiel auch Stangenelemente dargestellt werden, die die Drehbewegung für die Zuführelemente sicher übertragen können. Dies können beispielsweise Vierkantelemente oder Zitronenprofile sein.

Weitere vorteilhafte Ausgestaltungen der Erfindung ergeben sich aus der nachfolgenden Beschreibung und der Zeichnung.

In der Zeichnung zeigen:
- Fig. 1: ein Ausführungsbeispiel eines selbstfahrenden Feldhäckslers nach der Erfindung;
- Fig. 2: ausschnittsweise in einer schrägen Ansicht von unten Teile des Ausführungsbeispiels nach Fig. 1 mit Darstellung des Einzugsgehäuses mit Hydraulikzylinder für die abklappbaren Teile, jedoch ohne dem Einzugsgehäuse vorgeordneten Teilen,
- Fig. 3: eine zu Fig. 2 analoge Darstellung in einer perspektivischen Seitendarstellung mit dem Einzugsgehäuse in der Betriebsstellung, und
- Fig. 4: eine zu Fig. 3 analoge Darstellung mit in Fahrtrichtung nach vorne zum Boden hin abgeklapptem Einzugsgehäuse.

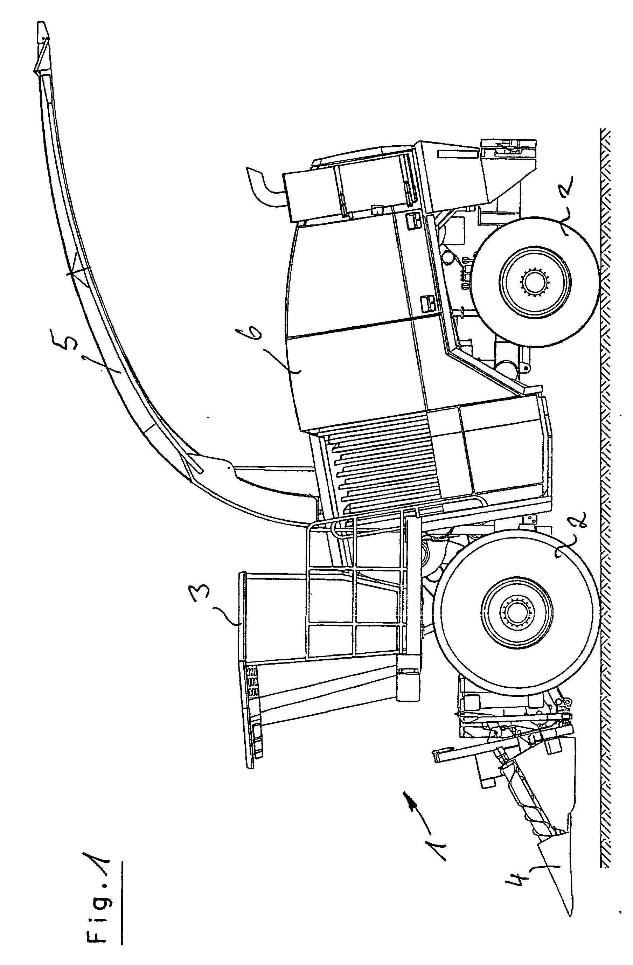

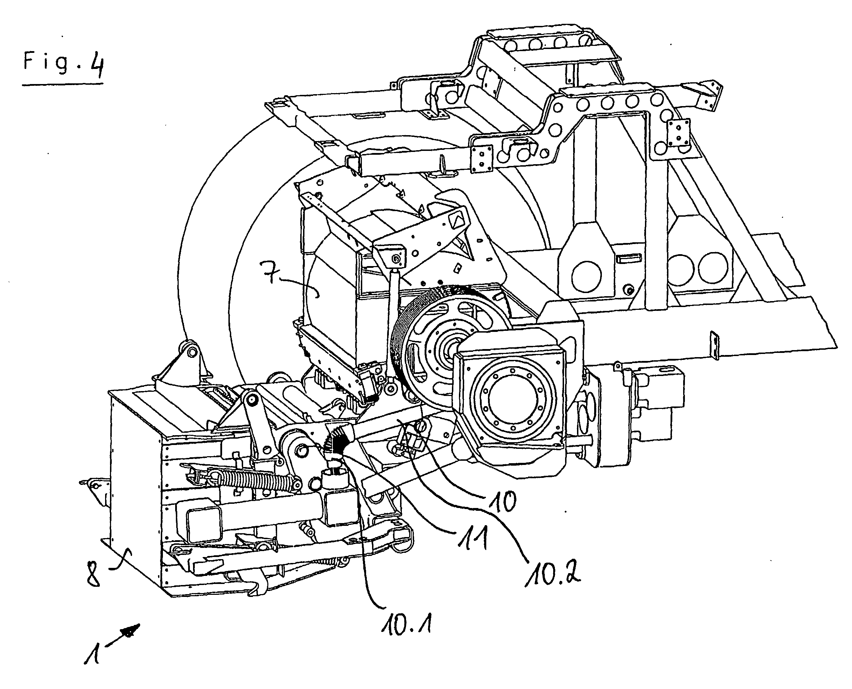

Der in Fig. 1 ganz allgemein dargestellte Feldhäcksler 1 hat Räder 2, eine Kabine 3, ein im Ausführungsbeispiel vorgebautes Maisgebiß 4, ein Auswurfrohr 5 und innerhalb des Gehäuses 6 angeordneten Einheiten wie Antrieb, Getriebe, Häckselvorrichtung, Komcracker und dergleichen Feldhäcksler-typische Aggregate. Das im einzelnen der Häckseleinrichtung 7 (siehe Fig. 4) vorgeordnete Einzugsgehäuse 8 hat Zuführelemente 9, wie zum Beispiel die beiden übereinander angeordneten Einzugswalzen sowie - im einzelnen nicht sichtbar - weitere Einzugs- und Vorpresswalzen, die von einer Gelenkwelle 10 über im einzelnen nicht näher sichtbare Getriebeeinheiten anzutreiben sind.

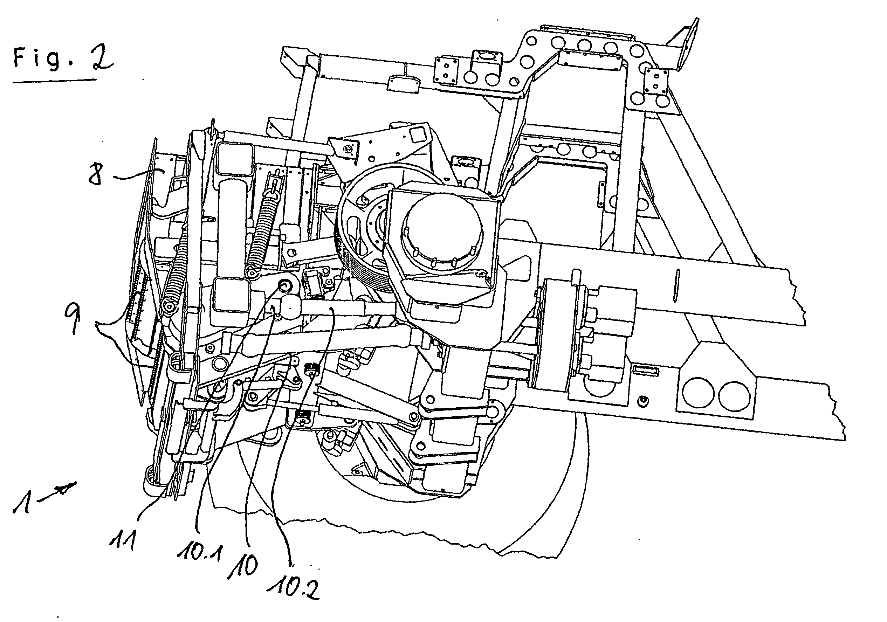

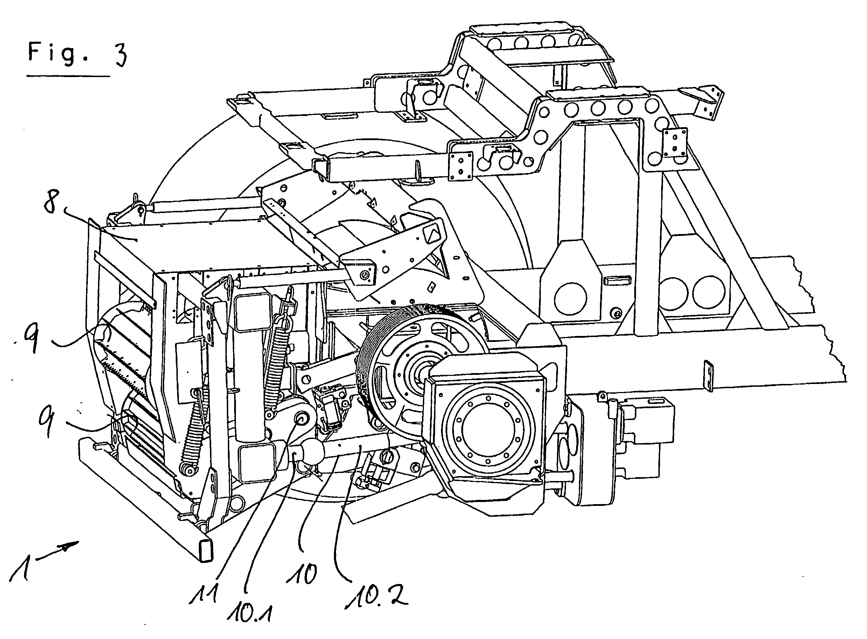

Das Einzugsgehäuse 8 ist in Fig. 2 und 3 in der in der Betriebsstellung arretierten Position dargestellt, in Fig. 4 hingegen jedoch in Infahrtrichtung hin nach vorne abgeklappter Wartungsstellung. Dazu ist das Einzugsgehäuse 8 um eine quer zur Fahrtrichtung ausgerichtete, im wesentlichen horizontale Achse 11 abklappbar ausgebildet.

Die Gelenkwelle 10 ist gleichsinnig mit dem Einzugsgehäuse 8 in einem Gelenkwellenbereich 10.1 ebenfalls verschwenkbar ausgerichtet und hat darüber hinaus einen teleskopartig ausgebildeten Gelenkwellenbereich 10.2, so daß das Einzugsgehäuse 8 ohne das Erfordernis der Demontage der Gelenkwelle 10 aus den in den Fig. 2 und 3 ersichtlichen Betriebsstellungen in die in Fig. 4 gezeigte Wartungsstellung überführbar ist, in der zum Beispiel die Häckseleinrichtung 7 zugänglich ist. Dies ist mit nur wenigen Handgriffen nach zum Beispiel Lösen von entsprechenden Schnellverschlüssen und Betätigen eines Hydraulikzylinders zu bewerkstelligen.

## Patentansprüche

1. Erntemaschine (1), insbesondere selbstfahrender Feldhäcksler zum Aufnehmen und Häckseln von Mais, Anwelkgras, Grünfutter und dergleichen Erntegut, mit einem einer Häckseleinrichtung vorgeordneten, antreibbare Zuführelemente (9) aufweisenden Einzugsgehäuse (8), das aus einer eingeschwenkten Betriebsstellung um eine Achse (11) in eine aufgeschwenkte Wartungsstellung überführbar ist, wobei das Einzugsgehäuse (8) um eine quer zur Fahrtrichtung der Erntemaschine ausgerichtete, im wesentlichen horizontale Achse (11) in Fahrtrichtung nach vorne zum Boden hin abklappbar ist, **dadurch gekennzeichnet, daß** die Zuführelemente (9) des Einzugsgehäuses (8) über eine bereichsweise gleichsinnig mit dem Einzugsgehäuse verschwenkbare und bereichsweise teleskopartig ausgebildete Gelenkwelle (10) antreibbar sind.

2. Erntemaschine nach Anspruch 1, **dadurch gekennzeichnet, daß** der teleskopartig ausgebildete Bereich (10.2) der Gelenkwelle (10) zwischen dem gleichsinnig mit dem Einzugsgehäuse (8) verschwenkbaren Bereich (10.1) der Gelenkwelle (10) und deren gelenkigen, erntemaschinenseitigen Anbindungen teleskopartig ausgebildet ist.

3. Erntemaschine nach Anspruch 1 oder 2, **dadurch gekennzeichnet, daß** der gleichsinnig mit dem Einzugsgehäuse (8) verschwenkbare Bereich (10.1) der Gelenkwelle (10) um eine Schwenkachse verschwenkbar ist, die nahe der im wesentlichen horizontalen Klappachse (11) des Einzugsgehäuses (8) gelegen ist.

4. Erntemaschine nach Anspruch 3, **dadurch gekennzeichnet, daß** die Schwenkachse der Gelenkwelle (10) im wesentlichen parallel zur Klappachse (11) des Einzugsgehäuses (8) oder unter einem spitzen Winkel zu dieser verlaufend zueinander ausgerichtet sind.

5. Erntemaschine nach einem der Ansprüche 1 bis 4, **dadurch gekennzeichnet, daß** der teleskopartige Bereich (10.2) der Gelenkwelle (10) durch ineinandergreifende, kraftschlüssig miteinander verbindbare Elemente gebildet ist.

## Claims

1. Harvesting machine (1 ), in particular a motor field cutter, for receiving and cutting maize, wilting grass, green fodder and similar harvested crops, with a draw-in housing (8') which exhibits drivable feed elements (9) connected in series to a cutting device and which can be transferred from an inwardly swivelled operating position about an axis (11) to an upwardly swivelled maintenance position, wherein the draw-in housing (8) can be folded forward in the direction of travel, toward the ground, about an essentially horizontal axis (11) aligned transversely to the direction of travel of the harvesting machine, **characterised in that** the feed elements (9) of the draw-in housing (8) can be driven by a cardan shaft (10) that can be swivelled in certain areas in the same direction as the draw-in housing and is designed telescopically in certain areas.

2. Harvesting machine according to Claim 1, **characterised in that** the telescopically designed area (10.2) of the cardan shaft (10) is designed telescopically between the area (10.1) of the cardan shaft (10) that can be swivelled in the same direction as the draw-in housing (8) and its articulated connections on the harvesting machine side.

3. Harvesting machine according to Claim 1 or 2, **characterised in that** the area (10.1) of the cardan shaft (10) that can be swivelled in the same direction as the draw-in housing (8) may be swivelled about a swivel axis which is located close to the essentially horizontal folding axis (11) of the draw-in housing (8).

4. Harvesting machine according to Claim 3, **characterised in that** the swivel axis of the cardan shaft (10) is aligned essentially parallel to the folding axis (11) of the draw-in housing (8), or runs at an acute angle to it.

5. Harvesting machine according to one of Claims 1 to 4, **characterised in that** the telescopic area (10.2) of the cardan shaft (10) is formed by mutually engaging elements that can be positively connected to each other.

## Revendications

1. Machine de récolte (1), en particulier une récolteuse-hacheuse automotrice pour ramasser et hacher du maïs, de l'herbe préfanée, du fourrage vert et de produits de récolte similaires, comportant un châssis d'introduction (8) présentant des éléments d'alimentation (9) disposés à l'avant d'un dispositif hacheur et pouvant être entraînés, lequel peut être transféré d'une position de fonctionnement obtenue par pivotement vers l'intérieur, autour d'un axe (11) dans une position de maintenance obtenue par pivotement vers l'extérieur, le châssis d'alimentation (8) étant rabattable autour d'un axe (11) sensiblement horizontal (11), orienté transversalement au sens de marche de la machine de récolte, vers l'avant en direction du sol, **caractérisée en ce que** les éléments d'alimentation (9) du châssis d'introduction (8) peuvent être entraînés par l'intermédiaire d'un arbre articulé (10) pivotable par zone dans le même sens que le châssis d'introduction (8) et conformé par zone de façon télescopique.

2. Machine de récolte selon la revendication 1, **caractérisée en ce que** la zone conformée de façon télescopique (10.2) de l'arbre articulé (10) est conformée de façon télescopique entre la zone (10.1) de l'arbre articulé (10) pivotable dans le même sens que le châssis d'introduction (8) et les liaisons articulées dudit arbre articulé (10) du côté de la machine de récolte (1).

3. Machine de récolte selon la revendication 1 ou la revendication 2, **caractérisée en ce que** la zone (10.1) de l'arbre articulé (10) pivotable dans le même sens que le châssis d'introduction (8) est pivotable autour d'un axe de pivotement qui est situé à proximité de l'axe de rabattement (11) sensiblement horizontal du châssis d'introduction (8).

4. Machine de récolte selon la revendication 3, **caractérisée en ce que** l'axe de pivotement de l'arbre articulé (10) est orienté sensiblement parallèlement à l'axe de rabattement (11) du châssis d'introduction (8) ou est orienté l'un par rapport à l'autre de façon à s'étendre à un angle aigu par rapport audit axe de rabattement (11).

5. Machine de récolte selon l'une quelconque des revendications 1 à 4, **caractérisée en ce que** la zone de type télescopique (10.2) de l'arbre articulé (10) est formée d'éléments pouvant être raccordés les uns aux autres par la force et s'emboîtant les uns dans les autres.
